# EUROPEAN PATENT SPECIFICATION

(11) **EP 4 358 398 B1**
(45) Date of publication and mention of the grant of the patent: **15.07.2026**
(21) Application number: 22202467.1
(22) Date of filing: 19.10.2022
(51) Int. Cl.: H02S 20/10

(54) **MOUNTING KIT, PHOTOVOLTAIC MODULE ARRANGEMENT AND ASSEMBLY METHOD**
MONTAGESATZ, PHOTOVOLTAIKMODULANORDNUNG UND MONTAGEVERFAHREN
KIT DE MONTAGE, AGENCEMENT DE MODULE PHOTOVOLTAÏQUE ET PROCÉDÉ D'ASSEMBLAGE

(43) Date of publication of application: 24.04.2024
(73) Proprietor: Solyco Technology GmbH, 12205 Berlin (DE)
(72) Inventor: Podlowski, Lars, 12205 Berlin (DE)
(74) Representative: Eisenführ Speiser

(56) References cited:
- CH-A2- 717 416
- KR-B1- 100 972 598
- KR-B1- 101 164 176
- US-A1- 2016 099 673

## Description

### FIELD OF THE INVENTION

The invention relates to a mounting kit comprising components for assembling a mounting system that is configured for holding a photovoltaic module vertically with respect to a ground. The invention furthermore relates to a photovoltaic module arrangement comprising a mounting system and at least one photovoltaic module comprising a number of solar cells that are configured for generating electricity. The invention also relates to a method for assembling a photovoltaic module arrangement.

### BACKGROUND OF THE INVENTION

A photovoltaic module, sometimes also referred to as solar panel, typically comprises a number of solar cells for converting energy of sunlight into electricity by the photovoltaic effect. Typically, a photovoltaic module is mounted on a mounting system that holds the photovoltaic module at an angle of about 30° facing towards south to achieve high electrical power output.

However, for some applications such as when used on crop fields, on flat roofs with roof greening or as a bifacial solar fence, it has been found beneficial to arrange a photovoltaic module vertically with respect to a ground. For example, WO 2018/115120 A2 discloses a photovoltaic system comprising vertical bifacial photovoltaic modules. WO 2018/115120 A2 focusses on a support construction that shall be easy to manufacture and assemble and that is composed of vertical posts interconnected at intersection points and cross-members running horizontally so that rectangular assembly fields for the individual PV modules can be provided. The posts and cross-members shall be formed by standard profiles to save material and, in particular, the posts shall be divided into two interconnectable sections to simplify the assembly process.

US 2016/0099673 A1 describes a modular solar panel system that includes a plurality of monocoques defining a self-supporting curved shape and including a solar panel on the curved shape, a plurality of posts with opposing sides engaging and supporting a vertical side edge of the monocoques, and an electrical circuit interconnecting the solar panels for electrical flow and power management.

CH 717 416 A2 describes a supporting structure for holding a row of vertically arranged PV modules comprising vertical posts arranged spaced apart in the direction of the row.

KR 100972598 B1 describes a soundproof fence which is installed in order to cut off the noise occurring in the road.

Yet, it is still desirable to further improve photovoltaic systems and their assembly.

### SUMMARY OF THE INVENTION

The present invention is based on the objective of providing an improved mounting kit for assembling a mounting system for mounting a photovoltaic module vertically with respect to a ground. Furthermore, the present invention is based on the objective of providing an improved photovoltaic module arrangement and an improved method for assembling a photovoltaic module arrangement.

According to the invention, a mounting kit according to claim 1 comprising components for assembling a mounting system is proposed. The mounting system is configured for holding a photovoltaic module vertically with respect to a ground. The mounting kit comprises at least the following components: at least two lateral frame elements and at least two stop elements. The at least two lateral frame elements each comprise at least two lateral grooves arranged on opposite sides of the respective lateral frame element. Each lateral groove is configured for accommodating a lateral edge of a photovoltaic module. The at least two stop elements each are configured to be at least partly arranged in the lateral groove of a given one of the lateral frame elements. Each of the at least two stop elements is configured for supporting a photovoltaic module to be accommodated in the respective lateral groove.

The invention includes the recognition that flat roofs with roof greening are beneficial to improve and reduce energy consumption of a building. Furthermore, the typically large surface of a flat roofs with roof greening could generally be used for generating electricity using photovoltaic modules. However, typical photovoltaic modules inclined by an angle of about 30° with respect to a flat roof would cause shadowing of the vegetation in terms of sunlight and also rainwater which would be unfavourable for the vegetation present on the roof. Yet, to reduce shadowing of the vegetation, vertically arranged photovoltaic modules could be used instead.

However, when mounting photovoltaic modules vertically, forces acting on the individual photovoltaic modules can be comparatively large, e.g., compared to photovoltaic modules that are mounted at an angle of about 30°. Therefore, a photovoltaic module arrangement comprising a mounting system for holding the photovoltaic modules vertically has to be comparatively robust to ensure that the photovoltaic modules are not damaged. A trend for making the photovoltaic module arrangement more robust is to use relatively small photovoltaic modules and to use fixation means to mount the photovoltaic modules to the mounting system. Yet, this is considered disadvantageous since a comparatively large portion of such a photovoltaic module arrangement is comprised of parts of the mounting system. Moreover, a comparatively large number of different components is required making such a photovoltaic module arrangement costly and complex in terms of fabrication and assembly. To provide a more cost efficient and a more easily to assemble photovoltaic module arrangement, the number of components of the photovoltaic module arrangement should be further reduced and also the mounting of a photovoltaic module to a mounting system should be made less elaborate. Moreover, to increase the electricity output per surface area, a comparatively large portion of a photovoltaic module arrangement should be comprised of photovoltaic modules rather than of the mounting system. At the same time, it has to be ensured that the photovoltaic module arrangement is robust enough to withstand winds acting on the vertically arranged photovoltaic modules.

At least some of these requirements can be met with the mounting kit according to the invention comprising components for assembling a mounting system that is configured for holding a photovoltaic module vertically with respect to a ground. In particular, the mounting kit provides components that can be used for assembling a mounting system for holding a vertical photovoltaic module. The mounting kit is thus particularly suitable for providing photovoltaic modules on a flat roof with roof greening. The components of the mounting kit can be assembled in a relatively quick and simple manner in that the at least two lateral frame elements are provided to accommodate the lateral edges of a photovoltaic module and the at least two stop elements are at least partly arranged in the respective lateral grooves for supporting the photovoltaic module accommodated in the lateral grooves. Since no more components are required to hold a photovoltaic module with the lateral frame elements vertically with respect to a ground, the mounting kit requires a reduced number of components compared to known concepts. In particular, no clamps, screws or other fixation means are required to attach a photovoltaic module in respective lateral grooves. A photovoltaic module accommodated in the lateral grooves is merely supported by the respective stop elements and the lateral grooves. Thereby, a floating fixation is realised that is based on a loose and movable connection between a respective photovoltaic module and the lateral frame elements and the stop elements. Since the mounting kit's lateral frame elements comprise lateral grooves on opposite sides of a respective lateral frame element, each lateral frame element can be used for holding two photovoltaic modules on respective stop elements arranged in the lateral grooves, respectively. The mounting kit can thus be used for arranging several photovoltaic modules in a row and also for arranging several photovoltaic modules in different rows, e.g., in parallel rows.

Preferably, the mounting kit comprises at least two base plates, each comprising a mounting opening that is configured for accommodating and holding a lateral frame element in a vertical position with respect to the ground. The base plates serve for providing additionally stability to the mounting system to make the mounting system more robust. It is possible, that only some of the lateral frame elements or even none of the lateral frame elements are accommodated in a respective mounting opening of a base plate. The number of base plates can thus vary and can be selected such that the mounting system provides sufficient stability when holding one or more photovoltaic modules. For example, whether base plates should be employed can depend on the properties of the ground on which the mounting system is placed. For example, a ground with high friction may not require using the mounting system with any base plates such that also the mounting kit does not need to include any base plates.

The mounting kit comprises at least one top frame element that is configured to at least partly cover a top edge of the photovoltaic module. Covering a top edge of the photovoltaic module with a top frame element has the advantage that the top edge of the photovoltaic module is protected from mechanical damage, e.g., caused by hail. The use of a top frame element to at least partly cover a top edge of the photovoltaic module also provides additional robustness to the photovoltaic module, e.g., against wind acting on the photovoltaic module. The top frame element may thus contribute to preventing the photovoltaic module from deflection, e.g., due to wind acting on the photovoltaic module. A further advantage of arranging a top frame element to at least partly cover a top edge of the photovoltaic module is that due to the additional strength provided to the photovoltaic module, a comparatively large photovoltaic module can be used, i.e., having a larger surface area. This is beneficial since with a larger photovoltaic module typically also a larger electricity output can be achieved due to the larger number of solar cells present therein. It is thereby possible to use less mounting system components, e.g., less lateral frame elements such that also a larger portion of a photovoltaic module arrangement would be comprised of photovoltaic modules rather than of the mounting system.

At least the at least two lateral frame elements and/or the at least one top frame element are preferably made of an electrically isolating material. Alternatively, the at least two lateral frame elements and/or the at least one top frame element can be made of an electrically conducting material such as aluminium. Aluminium is preferred since it is generally available at combatively low costs. Preferably, the electrically isolating material is a synthetic material. The synthetic material can be or can comprise fiberglass, Kevlar^{®} and/or carbon fibres. It is a particular advantage of the at least two lateral frame elements and/or the at least one top frame element when being made of an electrically isolating material that no electrical grounding is required, e.g., as lightning protection. It is thus possible to provide the mounting kit with even less components, i.e., without any lightning protection means. Accordingly, if the at least two lateral frame elements and/or the at least one top frame element are made of an electrically isolating material, also the assembly of the mounting kit requires less steps and may be achieved comparatively faster. A further advantage of the at least two lateral frame elements and/or the at least one top frame element being made of an electrically isolating material is that a photovoltaic module can be arranged in the lateral grooves and supported by a stop element without any sealing means that in known photovoltaic system would be arrange between the aluminium frame elements and the photovoltaic module for protecting the photovoltaic module.

Preferably, the lateral grooves of a given one of the lateral frame elements extend from the respective lateral frame element's lower end to the upper end. Such a lateral frame element is typically comparatively easy to fabricate such that production costs may be further reduced.

Preferably, the at least two lateral frame elements each comprise a feedthrough that is configured for insertion of a stop elements of the at least two stop elements such that the stop element protrudes into the lateral groove of the respective lateral frame element. If the lateral grooves of a given one of the lateral frame elements extend from the respective lateral frame element's lower end to the upper end, a feedthrough can be fabricated at a flexible height such that a respective stop element can be arranged at a given height within the respective lateral groove. The predefined height within the respective lateral groove may be selected depending on the height a photovoltaic module to be held by the mounting system vertically with respect to the ground. For example, the feedthrough may be at a height such that a photovoltaic module supported by a stop element and accommodated in a respective lateral groove extends up to the upper end of the respective lateral frame element. Alternatively, it may be beneficial if the photovoltaic module can be held by the mounting system such that it exceeds beyond the upper end of the respective lateral frame element by a predefined length. This may be beneficial in case a top frame element having a U-profile shall be arranged on the top edge of the photovoltaic module.

Preferably, the mounting kit comprises at least one connector strut that is configured to mechanically connect two lateral frame elements of the at least two lateral frame elements with each other. Preferably, the at least one connector strut is used to connect two lateral frame elements of neighbouring rows of photovoltaic modules with each other. Thereby, a further rigidity of the mounting system can be achieved. Accordingly, the mounting system becomes even more robust.

Preferably, the connector strut comprises a cable routing groove for accommodating a cable of the photovoltaic module. For example, if the connector strut is used to connect two lateral frame elements of neighbouring rows of photovoltaic modules with each other, a cable may be guided through the cable routing groove from one row of photovoltaic modules to a neighbouring row of photovoltaic modules. A cable can thereby be protected from damage such that a photovoltaic module arrangement can be made more robust.

Preferably, the mounting kit comprises a wind redirecting element that is configured to be arranged inclined towards a photovoltaic module held vertically by the assembled mounting system for redirecting impinging wind above the photovoltaic module. A wind redirecting element can be made of glass, metal or synthetic material and generally does not have any solar cells. Alternatively, the wind redirecting element may also comprise one or more solar cells, i.e., the wind redirecting element may be a photovoltaic module. Preferably, the wind redirecting element is arranged such that impinging wind from a certain wind direction is first reaching the wind redirecting element thereby becoming redirected above the photovoltaic module. Thereby, the photovoltaic modules of a photovoltaic module arrangement can be further protected from wind acting on the photovoltaic modules. This makes it possible to use even larger photovoltaic modules such that the number of components of a mounting system can be further reduced.

Preferably, the mounting kit comprises at least one connector that is configured to mechanically connect the at least one top frame element to a respective lateral frame element of the at least two lateral frame elements. The same connector or a separate connector of the mounting kit can be configured to mechanically connect the at least one top frame element to a further top frame element. By connecting the at least one top frame element to a respective lateral frame element using the connector, the rigidity of the mounting system can be increased to make the mounting system more robust. When connecting the at least one top frame element to a further top frame element, e.g., arranged to cover a top edge of a neighbouring photovoltaic module, a stiffness within a row of photovoltaic modules can be created that further increases the robustness of a photovoltaic module arrangement.

A connector that is configured to connect the at least one top frame element to a further top frame element and optionally also to a respective lateral frame element of the at least two lateral frame elements can have a U-shaped or fork-shaped profile. That is, preferably, the at least one connector comprises a U-shaped or fork-shaped profile with a first leg usable to mechanically connect the at least one top frame element to a respective lateral frame element of the at least two lateral frame elements and a second leg suitable to connect the at least one top frame element to the further top frame element.

According to the invention, also a photovoltaic module arrangement according to claim 9 comprising a mounting system and at least one photovoltaic module comprising a number of solar cells that are configured for generating electrical power is proposed. The mounting system holds the at least one photovoltaic module vertically with respect to a ground and comprises at least two lateral frame elements and at least two stop elements. The at least two lateral frame elements are arranged in a vertical position with respect to the ground. Each of the at least two lateral frame elements comprises at least two lateral grooves arranged on opposite sides of the respective lateral frame element. The at least two stop elements at least partly are arranged in the lateral groove of a given one of the lateral frame elements. The at least one photovoltaic module is accommodated with its lateral edges in respective lateral grooves of the at least two lateral frame elements supported by the two stop elements. The mounting system of the photovoltaic module arrangement may be realised by assembling the components of the mounting kit described before. The photovoltaic module is preferably accommodated in the respective lateral grooves and supported by the respective stop elements in a floating manner without any clamps, screws or other fixation means. That is, the photovoltaic module is held in vertical position only by the respective lateral grooves and stop elements. No further fixation means are required. Furthermore, no sealing is required between the laterals frame elements and the photovoltaic module held by the lateral frame elements.

Preferably, the at least two lateral grooves have a lateral groove width that substantially corresponds to a photovoltaic module thickness of the photovoltaic module defined by the parallel outer surfaces of one or more glass sheets of the photovoltaic module. Thereby, the photovoltaic module may sit relatively tight in in the lateral groove of the lateral frame element. Preferably, the at least two lateral frame elements are in direct contact with one or more glass sheets of the photovoltaic module. In particular, no sealing may be present between the glass sheets of the photovoltaic module and the lateral frame elements. Thereby, the number of components present in the photovoltaic module arrangement can be reduced and the assembly may be conducted faster.

Preferably, the photovoltaic module is a bifacial photovoltaic module, i.e., it can produce electrical energy when illuminated on both its surfaces, front or rear. The photovoltaic module can comprise two glass sheets with the solar cells being arranged between the two glass sheets. Alternatively, the photovoltaic module may comprise a single glass sheet and the solar cells can be attached to the single glass sheet using a transparent foil. Preferably, the photovoltaic module has a surface area of at least 0.4 m², preferably, of at least 0.6 m² or even of at least 0.8 m². Preferably, the photovoltaic module comprises two glass sheets in between of which the number of solar cells are arranged, wherein each of the two glass sheets has a maximum thickness of 4 mm or less, preferably, of 3.5 mm or less, e.g., of 3.2 mm or less. It is thus preferred to use comparatively thin glass sheets to provide an improved electrical power output per photovoltaic module. Preferably, the photovoltaic module) has a length of at least 1.8 m, preferably, of at least 2 m and/or a height of at least 0.3 m, preferably, of at least 0.4 m. It is thus preferred to use comparatively large photovoltaic modules. Thereby, it is possible to reduce the number of components of the mounting system such that a larger portion of the photovoltaic module arrangement is comprised of photovoltaic modules. Preferably, the photovoltaic module is configured to provide a peak power of at least 60 Wp, preferably, of at least 100 Wp, even more preferably of at least 140 Wp, for example, of 150 Wp to 170 Wp.

The at least one stop element may be a pin that is arranged in a feedthrough of a respective lateral frame element to support photovoltaic module accommodated in the lateral frame element's lateral grooves. Alternatively, the at least one stop element may be a mounting bracket that is arranged inside a respective lateral groove to support the photovoltaic module accommodated in the lateral frame element's lateral grooves. In particular, it is preferred that the at least one stop element protrudes into a respective lateral groove of a given lateral frame element for supporting a photovoltaic module.

Preferably, at least one lateral frame element of the photovoltaic module arrangement is arranged in a mounting opening of a base plate. Thereby, the lateral frame element can be held in its place even if wind is acting on the photovoltaic module. Accordingly, when using one or more base plates, the mounting system can be made more robust against environmental influences.

The photovoltaic module arrangement comprises a top frame element that is arranged on top of the at least one photovoltaic module such that a top edge of the photovoltaic module is at least partly covered by the at least one top frame element. The top frame element may provide additional stability to the photovoltaic module such that it is possible to use a comparatively large photovoltaic module, i.e., having a comparatively large surface area. Moreover, the top frame element may serve for protecting the top edge of the photovoltaic module from mechanical damage.

Preferably, the lateral frame elements and/or the at least one top frame element are made of an electrically isolating material. Alternatively, an electrically conducting material such as aluminium may be used instead.

Preferably, the at least one top frame element has a U-profile and encloses the top edge of the photovoltaic module to at least partly cover the photovoltaic module top edge. A top frame element having a U-profile may be used to enclose a photovoltaic module comprising a single glass sheet or to enclose a photovoltaic module comprising two parallel glass sheets enclosing solar cells.

Alternatively, it may be beneficial that the photovoltaic module comprises two glass sheets and wherein the at least one top frame element has a T-profile that has a vertical section and a horizontal section. Preferably, with its vertical section, the top frame element is arranged between the two glass sheets and with its horizontal section, the top frame element at least partly covers the top edge of the photovoltaic module. Thereby, the top frame element can protect the top edge from mechanical damage, e.g., caused by hail.

The photovoltaic module arrangement comprises a connector that is configured to mechanically connect the at least one top frame element to a lateral frame element of the at least two lateral frame elements. Thereby, a rigid connection between the top frame element and the lateral frame element can be achieved that makes the photovoltaic module arrangement more robust, e.g., against wind acting on the photovoltaic module.

The photovoltaic module arrangement may comprise several photovoltaic modules. For example, the photovoltaic module arrangement may comprise a first photovoltaic module held in vertical position with respect to the ground by being arranged with its lateral edges in a first lateral groove of a first lateral frame element and on a first stop element arranged at least partly in the first lateral groove and a second lateral groove of a second lateral frame element and on a second stop element arranged at least partly in the second lateral groove. The photovoltaic module arrangement further comprises at least a second photovoltaic module held in vertical position with respect to the ground by being arranged with its lateral edges in a third lateral groove of the second lateral frame element and on a third stop element protruding into the third lateral groove, and in a fourth lateral groove of a third lateral frame element and on a fourth stop element protruding into the fourth lateral groove.

If the photovoltaic module arrangement comprises several photovoltaic modules it is preferred that on the top edge of the first photovoltaic module, a first top frame element is arranged and on the top edge of the second photovoltaic module a second top frame element is arranged. The first top frame element and the second top frame element are preferably mechanically connected to each other by a connector that also mechanically connects the first top frame element and the second top frame element to the second lateral frame element. Thereby, a rigid connection between the two photovoltaic modules can be achieved that also allows using comparatively large photovoltaic modules.

A connection between a first top frame element and a second top frame element can be realised in various different ways. Generally, the connector may be is configured as a clip or clamp or a bridge or coupler. The connector can be U-shaped or fork-shaped such that one leg of the connector can be inserted into the channel or hole of a first top frame element and a second leg of connector can be inserted into the channel or hole of a neighbouring second top frame element for connecting the two vertical photovoltaic modules. For example, the first top frame element may comprise a first feedthrough and the second top frame element may comprise a second feedthrough. Preferably, the second lateral frame element may comprise a first and a second hole such that the first feedthrough and the first hole form a first common channel and the second feedthrough and the second hole form a second common channel. The connector may comprise a U-shaped or fork-shaped profile with a first leg being inserted into the first common channel and a second leg being inserted into the second common channel thereby connecting the first and second top frame elements to one another and to the second lateral frame element.

The photovoltaic module arrangement may comprise several parallel rows of photovoltaic modules, e.g., two or more parallel rows of photovoltaic modules. Preferably, at least one photovoltaic module of the first row and at least one photovoltaic module of the second row are mechanically connected to each other by means of a connector strut. Thereby, the rigidity of the photovoltaic module arrangement can be increased. In case a connector strut is present, it is further preferred that the connector strut comprises a cable routing groove for guiding a cable from the photovoltaic module of the first row to the second row of photovoltaic modules. The photovoltaic module arrangement may further comprise a wind redirecting element that is arranged in parallel to and inclined towards the at least one photovoltaic module for redirecting impinging wind above the photovoltaic module.

According to the invention, also a method for assembling a photovoltaic module arrangement according to claim 11 is proposed. The method comprises the steps of
- arranging a first lateral frame element and arranging a second lateral frame such that the first and second lateral frame elements are held in a vertical position with respect to a ground,
- arranging a first stop element in a first lateral groove of the first lateral frame element and arranging a second stop element in a second lateral groove of the second lateral frame element, and
- arranging a first photovoltaic module with its lateral edges in the first and second lateral grooves of the first and second lateral frame elements, respectively, supported by the first and second stop elements, respectively, such that the first photovoltaic module is held vertically with respect to the ground.

The method can be used to assemble the afore-described photovoltaic module arrangement, e.g., using the afore-described mounting kit.

The method may further comprise arranging a first lateral frame element in a mounting opening of a first base plate and/or arranging a second lateral frame element in a mounting opening of a second base plate such that the first and second lateral frame elements are held in a vertical position with respect to a ground.

Additionally or alternatively, the method may comprise arranging a first top frame element on top of the first photovoltaic module such that a top edge of the first photovoltaic module is covered by the first top frame element. Preferably, at least the at least two lateral frame elements and/or at least one top frame element are made of an electrically isolating material. Alternatively, an electrically conducting material can be used.

Optionally, the method may comprise the steps of
- arranging a second photovoltaic module with its lateral edges in a third lateral groove of the second lateral frame and on a third stop element arranged at least partly in the third lateral groove and in in a fourth lateral groove of a third lateral frame element and on a fourth stop element arranged at least partly in the fourth lateral groove such that the second photovoltaic module is held in vertical position with respect to the ground, and
- arranging a second top frame element on top of the second photovoltaic module such that at least a part of a top edge of the second photovoltaic module is covered by the second top frame element.

Preferably, in the method, the first top frame element comprises a first opening and the second top frame element comprises a second opening. Preferably, the second lateral frame comprises a first and a second hole such that the first opening and the first hole form a first common channel and the second opening and the second hole form a second common channel. Preferably, the method comprises that a connector having a U-shape is inserted with a first leg into the first common channel and with a second leg into the second common channel thereby connecting the first and second top frame section to one another and to the second lateral frame element.

In the method, it is furthermore preferred that two photovoltaic modules of two parallel rows of photovoltaic modules are mechanically connected to each other by means of a connector strut. Additionally or alternatively, the method may comprise arranging a wind redirecting element inclined towards the first photovoltaic module for redirecting impinging wind above the first photovoltaic module.

It shall be understood that the aspects described above, and specifically the mounting kit of claim 1, the photovoltaic module arrangement of claim 11 and the method for assembling photovoltaic module arrangement of claim 15, have similar and/or identical preferred embodiments, in particular as defined in the dependent claims.

It shall be further understood that a preferred embodiment of the present invention can also be any combination of the dependent claims or above embodiments with the respective independent claim.

These and other aspects of the invention will be apparent from and elucidated with reference to the embodiments described hereinafter with reference to the drawings.

### BRIEF DESCRIPTION OF THE DRAWINGS

- Fig. 1:: shows a photograph of a photovoltaic module arrangement comprising a mounting system that holds a photovoltaic module to in vertical position with respect to a ground;
- Fig. 2:: depicts a photograph showing a part of the first lateral frame element 110 of the photovoltaic module arrangement 10 described with reference to figure 1;
- Fig. 3:: depicts a photograph showing a lower part of the first lateral frame element of the photovoltaic module arrangement described with reference to figure 1;
- Fig. 4:: shows a cross-section through a frame element that may be used as the first lateral frame element, the second lateral frame element, all the connector strut as described, with reference to figure 1;
- Fig. 5:: schematically and exemplary the shows the second lateral frame element in a cross-sectional view;
- Fig. 6:: schematically and exemplary shows the first lateral frame element and the second lateral frame element as well as the first and second stop elements and the photovoltaic module in a cross-sectional view;
- Fig. 7:: schematically and exemplary shows a lateral frame element as well as a first top frame element and a second top frame element in a longitudinal sectional view;
- Fig. 8:: schematically and exemplary shows a lateral frame element and a first top frame element and a second top frame element in a top view;
- Fig. 9:: schematically and exemplary shows a lateral frame element and a first top frame element and a second top frame element in a top view;
- Fig. 10:: schematically and exemplary shows a photovoltaic module having two glass sheets, wherein a top edge of the photovoltaic module is enclosed by a U-shaped top frame element;
- Fig. 11:: schematically and exemplary shows a photovoltaic module having two glass sheets, wherein a top edge of the photovoltaic module is covered by a T-shaped top frame element;
- Fig. 12:: shows a photograph of a photovoltaic module arrangement arranged on a flat roof with roof greening;
- Fig. 13:: shows a photograph of a photovoltaic module arrangement arranged on a flat roof with roof greening;
- Fig. 14:: schematically and exemplary shows a wind redirecting element that is arranged inclined towards a photovoltaic module.

### DETAILED DESCRIPTION OF EMBODIMENTS

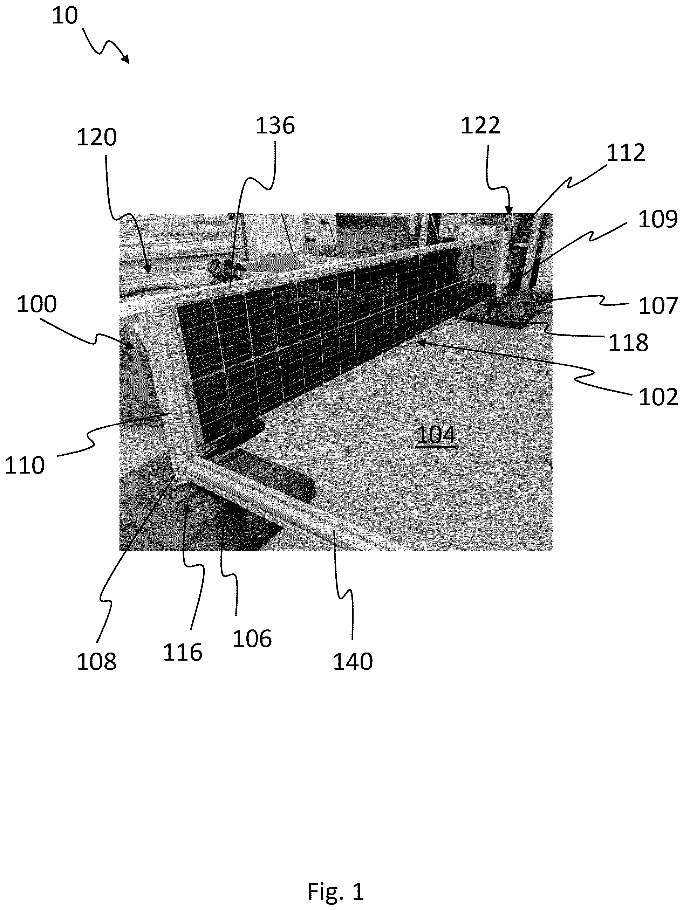

Figure 1 shows a photograph of a photovoltaic module arrangement 10 comprising a mounting system 100 that holds a photovoltaic module 102 in vertical position with respect to a ground 104. The photovoltaic module 100 comprises a plurality of solar cells that are configured for generating electrical power. The mounting system 100 comprises a first lateral frame element 110 and a second lateral frame element 112. The first lateral frame element 110 is arranged in a mounting opening 108 of a first base plate 106. Thereby the first lateral frame element 110 is held in vertical position. The second lateral frame element 112 is likewise arranged in a mounting hole 109 of a second base plate 107. The first lateral frame element 110 and the second lateral frame element 112 have a rectangular cross-section and on each of their four side faces, a lateral groove extends from an upper end 120, 122, to a respective lower end 116, 118, respectively. With its lateral edges, the photovoltaic module 102 is accommodated in respective lateral grooves of the first and second lateral frame elements 110, 112 that face each other. The photovoltaic module 102 is further supported on a first stop element that is arranged at least partly in the respective lateral groove of the first lateral frame element 110 and on a second stop element that is arranged at least partly in the respective lateral groove of the second lateral frame element 112. The photovoltaic module 102 is held in a floating manner that is, the photovoltaic module 102 is only held by the respective lateral grooves of the first and second lateral frame elements 110, 112 and the first and second stop elements. No further means for fixating the photovoltaic module 102 in the respective lateral grooves are present, i.e., no clamps or screws as it is common with known concepts. Moreover, no sealing is present between the first and second lateral frame elements 110, 112 and the glass sheets of the photovoltaic module 102. This is particularly possible since the first and second lateral frame elements 110, 112 are made of fibreglass. Alternatively, other electrically isolating material such as Kevlar^{®} or carbon fibres may be used. Yet alternatively, an electrically conducting material such as aluminium may be used. However, if an electrically isolating material is used, there is no need of providing additional lightning protection such that the assembly of the photovoltaic module arrangement 10 becomes less complex.

The photovoltaic module arrangement 10 further comprises a top frame element 136 that has a U-shaped profile and encloses a top edge of the photovoltaic module 102. The top frame element 136 is likewise made of an electrically isolating material and reaches from the first lateral frame element 110 up to the second lateral frame element 112. The effect of the top frame element 136 is at least twofold. Firstly, the top frame element 136 provides additional stability to the photovoltaic module 110. Thereby, it is possible to use a comparatively large photovoltaic module 102, i.e., a photovoltaic module 102 that has a comparatively large surface area. Secondly, the top frame element 136 provides mechanical protection of the top edge of the photovoltaic module 102, e.g., that may be caused by hail. The top frame element 136 is mechanically connected using a connector to the first and second lateral frame elements 110, 112, respectively. Thereby, a rigidity of the mounting system 100 is increased. The photovoltaic module arrangement 10 further comprises a connector strut 140 that can be used for connecting the first lateral frame element 110 to a further lateral frame element used for holding a further photovoltaic module, e.g., that is arranged in parallel to the photovoltaic module 102.

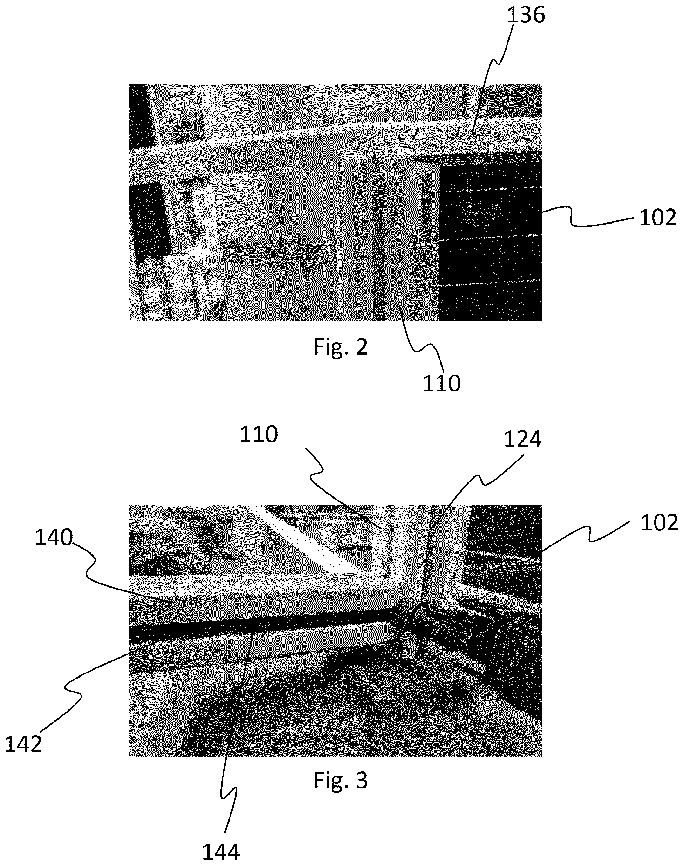

Figure 2 depicts a photograph showing a part of the first lateral frame element 110 of the photovoltaic module arrangement 10 described with reference to figure 1. In this photograph, it can be seen that the lateral edge of the photovoltaic module 102 is accommodated in a lateral groove of the first lateral frame element 110. Moreover, the top edge of the photovoltaic module 102 is enclosed by the U-shaped top frame element 136. The top frame element 136 reaches approximately up to the middle of the first lateral frame element 110, wherein the area in which the top frame element 136 is arranged on top of the first lateral frame element 110 is used for creating a rigid mechanical connection between the top frame element 136 and the first lateral frame element 110 by using a connector.

Figure 3 depicts a photograph showing a lower part of the first lateral frame element 110 of the photovoltaic module arrangement 10 described with reference to figure 1. In this photograph, a first lateral groove 124 of the first lateral frame element 110 is visible that accommodates the lateral edge of the photovoltaic module 102. The first lateral groove 124 extends from a lower end 116 of the first lateral frame element 110 to its upper and 120. The first stop element is provided at least partly within the first lateral groove 124 to support the lateral edge of the photovoltaic module 102. For example, a mounting bracket may be provided in the first lateral groove 124 as the first stope element at a height such that the photovoltaic module 102 protrudes slightly beyond the upper end 120 of the first lateral frame element to enable arrangement of the U-shaped top frame element 136 on the top edge of the photovoltaic module 102. The photograph further shows the connector strut 140. The connector strut 140 comprises a cable routing groove 142 accommodating a cable 144 of the photovoltaic module 102.

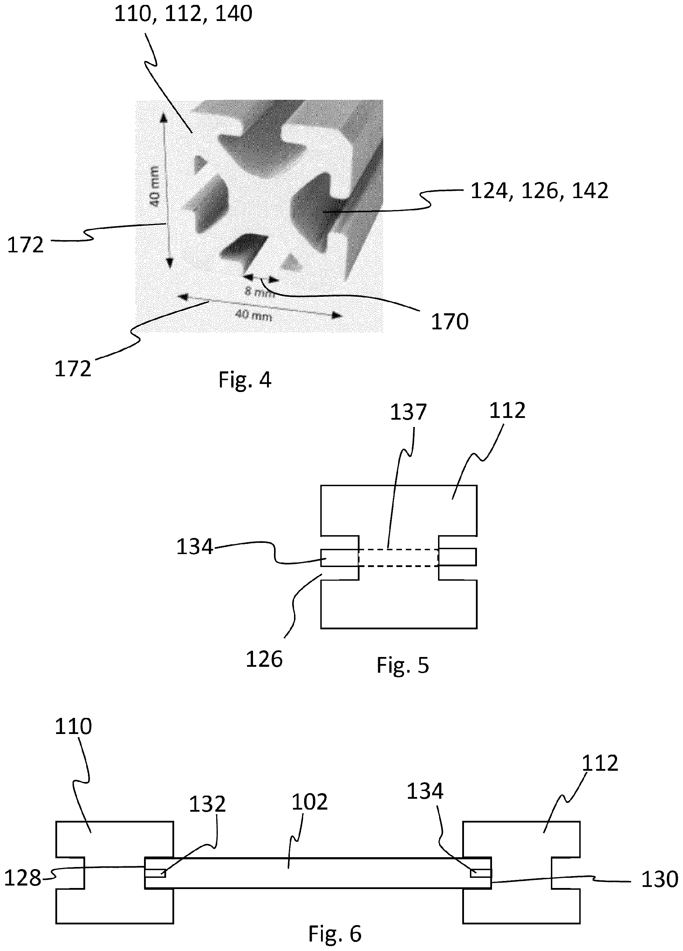

Figure 4 shows in a cross-sectional view a frame element that may be used as the first lateral frame element 110, the second lateral frame element 112, or the connector strut 140 as described, e.g., with reference to figure 1. The frame element has a rectangular cross-section with four grooves being arranged on the four sides, respectively. One of the grooves may be the first lateral groove 124 of the first lateral frame element 110, the second lateral groove 126 of the second lateral frame element 112, or the cable routing groove 124 of the connector strut 140. Each of the grooves comprises an approximately triangular cross section. However, alternatively, the cross-section may be rectangular following the shape of the lateral edge of the photovoltaic module 102. Each of the grooves comprises a groove opening having an opening size 170 of 8 mm. The sites of the frame element each have a length 172 of 40 mm.

Figure 5 schematically and exemplary shows the second lateral frame element 112 in a cross-sectional view. The second lateral frame element 112 comprises two lateral grooves arranged on opposing sides. Running horizontally through the second lateral frame element 112, there is a feedthrough 137. The feedthrough 137 is thus connecting the two lateral grooves. The feedthrough 137 accommodates a stop element 132 that protrudes with its outer ends into the two lateral grooves, respectively. On those parts of the stop element 132 that are arranged within the lateral grooves, a photovoltaic module may be arranged.

Figure 6 schematically and exemplary shows the first lateral frame element 110 and the second lateral frame element 112 as well as the first and second stop elements 132, 134 and the photovoltaic module 102 in a cross-sectional view. With its lateral edges 128, 130, the photovoltaic module 102 is accommodated in the first and second lateral grooves 124, 126 of the first and second lateral frame elements 110, 112, respectively. Furthermore, the photovoltaic module 102 is supported by the first and second stop elements 132, 134 that are arranged at least partly within the first and second lateral grooves 124, 126, respectively. No further fixation means are required such that the photovoltaic module 102 is solely held in vertical position by the first and second lateral grooves 124, 126 supported by the first and second stop elements 132, 134. Thereby, a floating connection is realised.

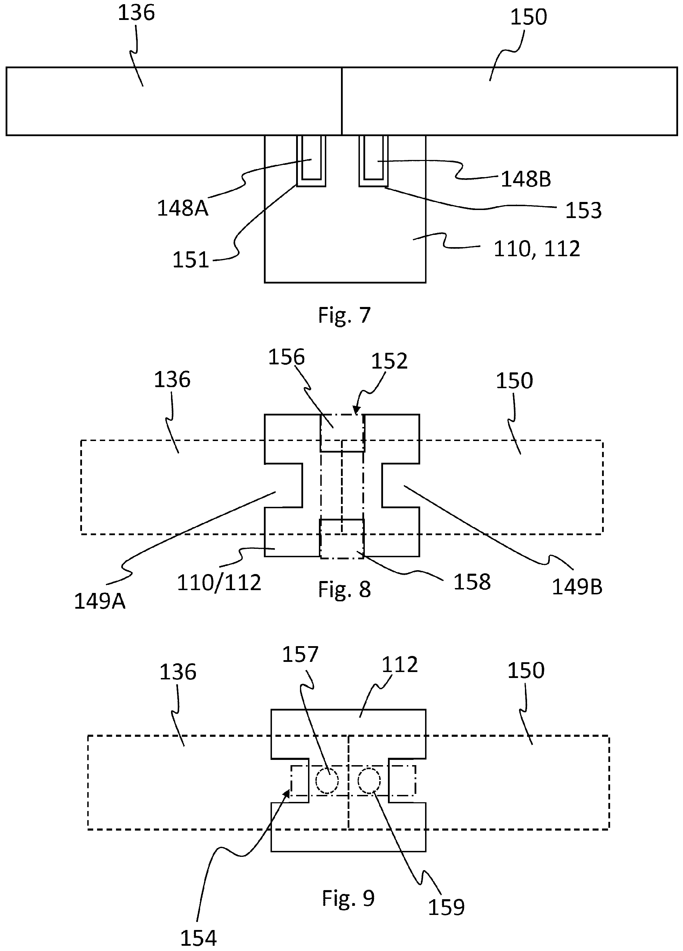

Figure 7 schematically and exemplary shows a lateral frame element as well as a first top frame element 136 and a second top frame element 150 in a longitudinal sectional view. The lateral frame element may be the first lateral frame element 110 or the second lateral frame element 112 of the photovoltaic module arrangement 10 described with reference to figure 1. Each of the first top frame element 136 and a second top frame element 150 comprises a connector 148A, 148B, respectively. The connector 148A, 148B is configured as a pin and serves for mechanically connecting the first top frame element 136 and a second top frame element 150 to the lateral frame element, respectively. The lateral frame element comprises two holes 151, 153 at its upper end 120, 122 that are configured complementary to the connectors 148A, 148B for accommodating the connector 148A, 148B.

Figure 8 schematically and exemplary shows a lateral frame element and a first top frame element 136 and a second top frame element 150 in a top view. As indicated by the dashed lines, the first top frame element 136 and the second top frame element 150 are sketched in a transparent manner such that the upper end of the lateral frame element is visible. The lateral frame element may be the first lateral frame element 110 or the second lateral frame element 112 of the photovoltaic module arrangement 10 described with reference to figure 1. The lateral frame element comprises four grooves. Two opposite grooves 149A, 149B serve accommodating a lateral edge of a photovoltaic module. The further two grooves 149C, 149D serve for accommodating the legs 156, 158 of a U-shaped connector 152 that clamps the first top frame element 136 and the second top frame element 150 to the lateral frame element.

Figure 9 schematically and exemplary shows a lateral frame element and a first top frame element 136 and a second top frame element 150 in a top view. As indicated by the dashed lines, the first top frame element 136 and the second top frame element 150 are sketched in a transparent manner such that the upper end of the lateral frame element is visible. The lateral frame element may be the first lateral frame element 110 or the second lateral frame element 112 of the photovoltaic module arrangement 10 described with reference to figure 1.

Each of the first top frame element 136 and the second top frame element 150 has an opening and on the upper end of the lateral frame element there are holes that each is arranged to form a common channel with a given one of the openings of the first top frame element 136 and the second top frame element 150. A connector 154 having legs 157, 159 is used for mechanically connecting the first top frame element 136 and the second top frame element 150 to each other and also to the lateral frame element.

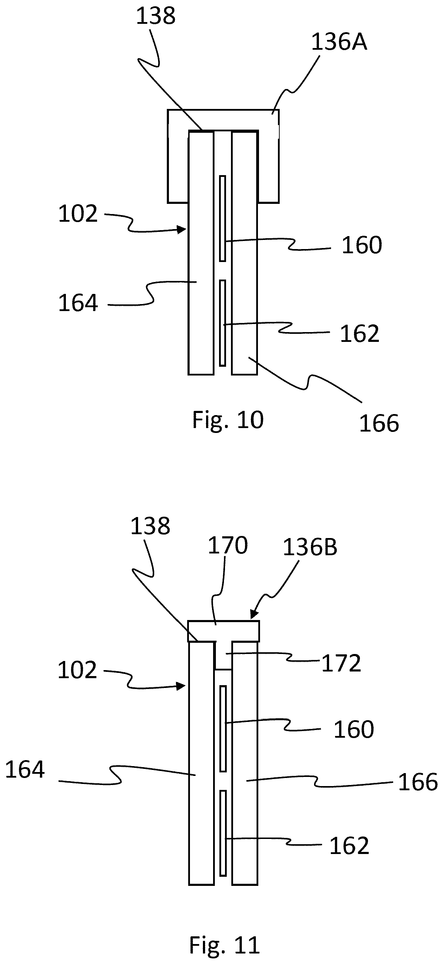

Figure 10 schematically and exemplary shows a photovoltaic module 102 having two glass sheets 164, 166. Between the two glass sheets 164, 166, a plurality of solar cells 160, 162 are arranged. The top edge 138 of the photovoltaic module 102 is enclosed by a top frame element 136A. The top frame element 136A has a U-shaped profile enclosing the photovoltaic module's top edge. Thereby, additional stability can be provided to the photovoltaic module 102 such that a photovoltaic module 102 with a comparatively large surface area may be used. Moreover, the top frame element 136A protects the top edge 138 from mechanical damage that may be caused, e.g., by hail.

Figure 11 schematically and exemplary shows a photovoltaic module 102 having two glass sheets 164, 166. Between the two glass sheets 164, 166, a plurality of solar cells 160, 162 are arranged. A top frame element 136B is arranged to cover a top edge 138 of the photovoltaic module 102. The top frame element 136B has a T-profile that has a vertical section 172 and a horizontal section 170. With its vertical section 172, the top frame element 136B is arranged between the two glass sheets 164, 166 and with its horizontal section 170, the top frame element 136B covers the top edge 138 of the photovoltaic module 102.

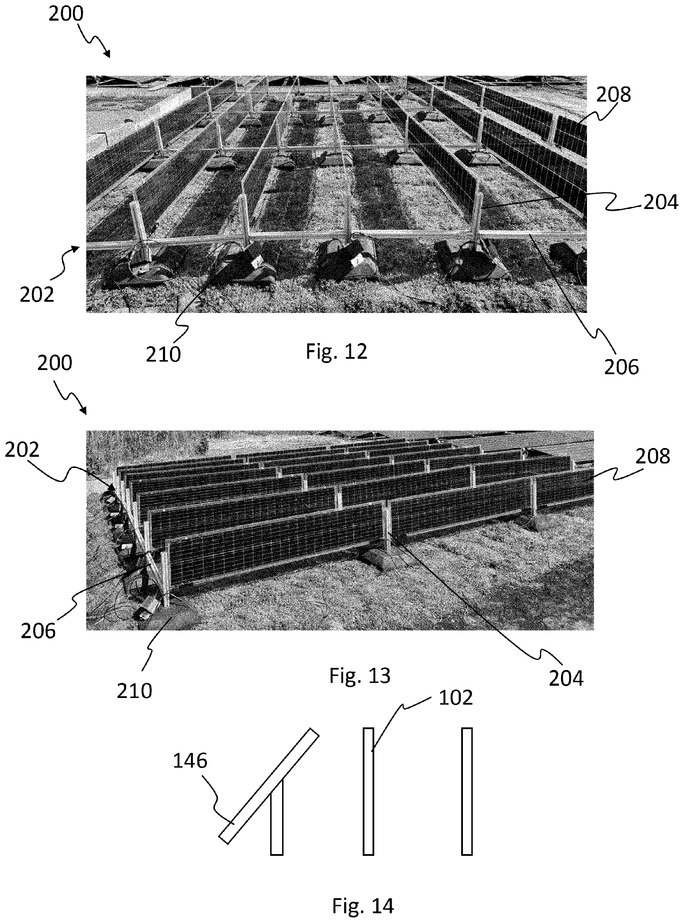

Figures 12 and 13 each show a photograph of a photovoltaic module arrangement 200 arranged on a flat roof with roof greening. The photovoltaic module arrangement 200 comprises a mounting system 202 with lateral frame elements 204 and connector struts 206 being made of aluminium. The mounting system 202 holds a plurality of photovoltaic modules 208 in a vertical position with respect to the flat roof. The lateral frame elements 204 each is accommodated in a respective mounting hole of a base plate 210 to provide additional stability to the photovoltaic module arrangement 200. However, it may not be required to use base plates at all. Accordingly, in an alternative embodiments of the photovoltaic module arrangement 200, no base plates are present. Yet alternatively, it may be sufficient if only some of the lateral frame elements 204 are accommodated in mounting openings of respective base plates. For example, only those lateral frame elements that are at the outside rim of the photovoltaic module arrangement 200 may be accommodated in respective base plates. In the photovoltaic module arrangement 200 shown, further stability is achieved by the connector struts 206 that each connect lateral frame elements 204 of neighbouring rows of photovoltaic modules 208.

Each of the photovoltaic modules 208 is accommodated with its lateral edges in respective lateral grooves of the lateral frame elements 204. Furthermore, the photovoltaic modules 208 each are supported in respective lateral grooves by stop elements such that the photovoltaic modules 208 are held in a floating manner without any additional fixation means. In the photovoltaic module arrangement 200 shown, no top frame elements are provided.

Figure 14 schematically and exemplary shows a wind redirecting element 146 that is arranged inclined towards a photovoltaic module 102 for redirecting impinging wind above the photovoltaic module 102.

Other variations to the disclosed embodiments can be understood and effected by those skilled in the art in practicing the claimed invention, from a study of the drawings, the disclosure, and the appended claims.

In the claims, the word "comprising" does not exclude other elements or steps, and the indefinite article "a" or "an" does not exclude a plurality.

Any reference signs in the claims should not be construed as limiting the scope.

## Claims

1. A mounting kit comprising components for assembling a mounting system (100) that is configured for holding a photovoltaic module (102) vertically with respect to a ground (104), wherein the mounting kit comprises at least the following components:
- at least two lateral frame elements (110, 112) that each comprise at least two lateral grooves (124, 126) arranged on opposite sides of the respective lateral frame element (110, 112), each lateral groove (124, 126) being configured for accommodating a lateral edge (128, 130) of the photovoltaic module (102),
- at least two stop elements (132, 134) each being configured to be at least partly arranged in the lateral groove of a given one of the lateral frame elements (110, 112), wherein each of the at least two stop elements (132, 134) is configured for supporting a photovoltaic module (102) to be accommodated in the respective lateral groove (124, 126),
- at least one top frame element (136) that is configured to at least partly cover a top edge (138) of the photovoltaic module (102), and
- at least one connector (152, 154) that is configured to mechanically connect the at least one top frame element (136) to a respective lateral frame element of the at least two lateral frame elements (110, 112) and to a further top frame element (150).

2. The mounting kit according to claim 1, comprising at least two base plates (106, 107), each comprising a mounting opening (108, 109) that is configured for accommodating and holding the lateral frame element (110, 112) in a vertical position with respect to the ground (104).

3. The mounting kit according to at least one of the preceding claims, wherein at least the at least two lateral frame elements (110, 112) and/or the at least one top frame element (136) are made of an electrically isolating material.

4. The mounting kit according to claim 2, wherein the electrically isolating material is or comprises fiberglass, Kevlar and/or carbon fibres.

5. The mounting kit according to at least one of the preceding claims, wherein the at least two lateral frame elements (110, 112) each comprise a feedthrough (136) that is configured for insertion of a stop elements (132, 134) of the at least two stop elements (132, 134) such that the stop element (132, 134) protrudes into the lateral groove of the respective lateral frame element (110, 112).

6. The mounting kit according to at least one of the preceding claims, comprising at least one connector strut (140) that is configured to mechanically connect two lateral frame elements of the at least two lateral frame elements (110, 112) with each other.

7. The mounting kit according to at least one of the preceding claims, comprising a wind redirecting element (146) that is configured to be arranged inclined towards a photovoltaic module (102) held vertically by the assembled mounting system (100) for redirecting impinging wind above the photovoltaic module (102).

8. The mounting kit according to at least one of the preceding claims, comprising at least one connector (148) that is configured to mechanically connect the at least one top frame element (136) to a respective lateral frame element of the at least two lateral frame elements (110, 112).

9. A photovoltaic module arrangement (10) comprising a mounting system (100) and at least one photovoltaic module (102) comprising a number of solar cells (160, 162) that are configured for generating electrical power, wherein the mounting system (100) holds the at least one photovoltaic module (102) vertically with respect to a ground (104), wherein:
- at least two lateral frame elements (110, 112) are arranged in a vertical position with respect to the ground (104), wherein each of the at least two lateral frame elements (110, 112) comprises at least two lateral grooves (124, 126) arranged on opposite sides of the respective lateral frame element (110, 112), and
- at least two stop elements (132, 134) that are at least partly arranged in the lateral groove of a given one of the lateral frame elements (110, 112), wherein
- the at least one photovoltaic module (102) is accommodated with its lateral edges (128, 130) in respective lateral grooves (124, 126) of the at least two lateral frame elements (110, 112) supported by the two stop elements (132, 134),
- a first photovoltaic module (102) is held in vertical position with respect to the ground (104) by being arranged with its lateral edges (128, 130) in first lateral groove (124) of a first lateral frame element (110) and on a first stop element (132) protruding into the first lateral groove (124) and a second lateral groove (126) of a second lateral frame element (112) and on a second stop element (134) protruding into the second lateral groove (124), and a second photovoltaic module held in vertical position with respect to the ground (104) by being arranged with its lateral edges in a third lateral groove of the second lateral frame element and on a third stop element protruding into the third lateral groove, and in a fourth lateral groove of a third lateral frame element and on a fourth stop element protruding into the fourth lateral groove, and
- on the top edge (138) of the first photovoltaic module (102), a first top frame element (136) is arranged and on the top edge of the second photovoltaic module a second top frame element (150) is arranged, wherein the first top frame element (136) and the second top frame element (150) are mechanically connected to each other by a connector (152, 154) that also mechanically connects the first top frame element (136) and the second top frame element (150) to the second lateral frame element (112)

10. The photovoltaic module arrangement according to claim 9, wherein the at least two lateral frame elements (110, 112) and the top frame element (136) are in direct contact with one or more glass sheets (164, 166) of the photovoltaic module (102).

11. A method for assembling photovoltaic module arrangement, the method comprising the steps of
- arranging a first lateral frame element (110) and arranging a second lateral frame element (112) such that the first and second lateral frame elements (110, 112) are held in a vertical position with respect to a ground (104),
- arranging a first stop element (132) in a first lateral groove (124) of the first lateral frame element (110) and arranging a second stop element (134) in a second lateral groove (126) of the second lateral frame element (112),
- arranging a first photovoltaic module with its lateral edges in the first and second lateral grooves (124, 126) of the first and second lateral frame elements (110, 112), respectively, supported by the first and second stop elements (132, 134), such that the first photovoltaic module (102) is held vertically with respect to the ground (104),
- arranging at least one top frame element (136) to at least partly cover a top edge (138) of the photovoltaic module (102), and
- arranging at least one connector (152, 154) to mechanically connect the at least one top frame element (136) to a respective lateral frame element of the at least two lateral frame elements (110, 112) and to a further top frame element (150).

## Patentansprüche

1. Montagesatz, umfassend Komponenten zum Zusammenbauen eines Montagesystems (100), das zum Halten eines Photovoltaikmoduls (102) senkrecht zum Boden (104) ausgelegt ist, wobei der Montagesatz mindestens die folgenden Komponenten umfasst:
- mindestens zwei seitliche Rahmenelemente (110, 112), die jeweils mindestens zwei seitliche Nuten (124, 126) aufweisen, die an gegenüberliegenden Seiten des jeweiligen seitlichen Rahmenelements (110, 112) angeordnet sind, wobei jede seitliche Nut (124, 126) dazu ausgelegt ist, eine Seitenkante (128, 130) des Photovoltaikmoduls (102) aufzunehmen,
- mindestens zwei Anschlagelemente (132, 134), die jeweils so ausgelegt sind, dass sie zumindest teilweise in der seitlichen Nut eines gegebenen der seitlichen Rahmenelemente (110, 112) angeordnet zu sein, wobei jedes der mindestens zwei Anschlagelemente (132, 134) dazu ausgelegt ist, ein in der jeweiligen seitlichen Nut (124, 126) aufzunehmendes Photovoltaikmodul (102) zu stützen,
- mindestens ein oberes Rahmenelement (136), das so ausgelegt ist, eine Oberkante (138) des Photovoltaikmoduls (102) zumindest teilweise abzudecken, und
- mindestens einen Verbinder (152, 154), der dazu ausgelegt ist, das mindestens eine obere Rahmenelement (136) mechanisch mit einem jeweiligen seitlichen Rahmenelement der mindestens zwei seitlichen Rahmenelemente (110, 112) und mit einem weiteren oberen Rahmenelement (150) zu verbinden.

2. Montagesatz nach Anspruch 1, umfassend mindestens zwei Grundplatten (106, 107), die jeweils eine Montageöffnung (108, 109) aufweisen, die zum Aufnehmen und Halten des seitlichen Rahmenelements (110, 112) in einer vertikalen Position in Bezug auf den Boden (104) ausgelegt ist.

3. Montagesatz nach mindestens einem der vorstehenden Ansprüche, wobei zumindest die mindestens zwei seitlichen Rahmenelemente (110, 112) und/oder das mindestens eine obere Rahmenelement (136) von einem elektrisch isolierenden Material gebildet werden.

4. Montagesatz nach Anspruch 2, wobei das elektrisch isolierende Material Glasfasern, Kevlar und/oder Kohlenstofffasern sind/ist oder umfasst.

5. Montagesatz nach mindestens einem der vorstehenden Ansprüche, wobei die mindestens zwei seitlichen Rahmenelemente (110, 112) jeweils eine Durchführung (136) umfassen, die zum Einführen eines Anschlagelements (132, 134) der mindestens zwei Anschlagelemente (132, 134) derart ausgelegt ist, dass das Anschlagelement (132, 134) in die seitliche Nut des jeweiligen seitlichen Rahmenelements (110, 112) hinausragt.

6. Montagesatz gemäß mindestens einem der vorstehenden Ansprüche, umfassend mindestens eine Verbindungsstrebe (140), die so ausgebildet ist, dass sie zwei seitliche Rahmenelemente der mindestens zwei seitlichen Rahmenelemente (110, 112) mechanisch miteinander verbindet.

7. Montagesatz gemäß mindestens einem der vorstehenden Ansprüche, umfassend ein Windumlenkelement (146), das ausgelegt ist, geneigt zu einem Photovoltaikmodul (102) angeordnet zu werden, welches Photovoltaikmodul (102) von dem zusammengebauten Montagesystem (100) vertikal gehalten wird, um auftreffenden Wind über das Photovoltaikmodul (102) umzulenken.

8. Montagesatz nach mindestens einem der vorstehenden Ansprüche, umfassend mindestens einen Verbinder (148), der so ausgelegt ist, das mindestens eine obere Rahmenelement (136) mechanisch mit einem jeweiligen seitlichen Rahmenelement der mindestens zwei seitlichen Rahmenelemente (110, 112) zu verbinden.

9. Photovoltaikmodulanordnung (10), umfassend ein Montagesystem (100) und mindestens ein Photovoltaikmodul (102), umfassend eine Anzahl von Solarzellen (160, 162), die zur Erzeugung elektrischer Energie ausgelegt sind, wobei das Montagesystem (100) das mindestens eine Photovoltaikmodul (102) vertikal in Bezug auf einen Boden (104) hält, wobei:
- mindestens zwei seitliche Rahmenelemente (110, 112) in einer vertikalen Position in Bezug auf den Boden (104) angeordnet sind, wobei jedes der mindestens zwei seitlichen Rahmenelemente (110, 112) mindestens zwei seitliche Nuten (124, 126), die an gegenüberliegenden Seiten des jeweiligen seitlichen Rahmenelements (110, 112) angeordnet sind, und
- mindestens zwei Anschlagelemente (132, 134), die zumindest teilweise in der seitlichen Nut eines gegebenen der seitlichen Rahmenelemente (110, 112) angeordnet sind, umfasst, wobei
- das mindestens eine Photovoltaikmodul (102) mit seinen Seitenkanten (128, 130) in jeweiligen seitlichen Nuten (124, 126) der mindestens zwei seitlichen, von den beiden Anschlagelementen (132, 134) gestützten Rahmenelemente (110, 112) aufgenommen wird, ein erstes Photovoltaikmodul (102) in vertikaler Position zum Boden (104) gehalten wird, indem es mit seinen Seitenkanten (128, 130) in einer ersten seitlichen Nut (124) eines ersten seitlichen, Rahmenelements (110) und auf einem ersten, in die erste seitliche Nut (124) und eine zweite seitliche Nut (126) eines zweiten seitlichen Rahmenelements (112) hinausragenden Anschlagelement (132) und auf einem zweiten, in die zweite seitliche Nut (124) hinausragenden Anschlagelement (134) angeordnet ist, und ein zweites, durch Anordnen seiner Seitenkanten in einer dritten seitlichen Nut des zweiten seitlichen Rahmenelements und auf einem in die dritte seitliche Nut hinausragenden dritten Anschlagelement und in einer vierten seitlichen Nut eines dritten seitlichen Rahmenelements und auf einem in die vierte seitliche Nut hinausragenden vierten Anschlagelement in vertikaler Position zum Boden (104) gehaltenes Photovoltaikmodul und
- an der Oberkante (138) des ersten Photovoltaikmoduls (102) ein erstes oberes Rahmenelement (136) und an der Oberkante des zweiten Photovoltaikmoduls ein zweites oberes Rahmenelement (150) angeordnet ist, wobei das erste obere Rahmenelement (136) und das zweite obere Rahmenelement (150) durch einen Verbinder (152, 154), der auch das erste obere Rahmenelement (136) und das zweite obere Rahmenelement (150) mit dem zweiten seitlichen Rahmenelement (112) verbindet, mechanisch miteinander verbunden sind.

10. Photovoltaikmodulanordnung nach Anspruch 9, wobei die mindestens zwei seitlichen Rahmenelemente (110, 112) und das obere Rahmenelement (136) in direktem Kontakt mit einer oder mehreren Glasscheiben (164, 166) des Photovoltaikmoduls (102) stehen.

11. Verfahren zum Zusammenbauen einer Photovoltaikmodulanordnung, wobei das Verfahren die folgenden Schritte umfasst:
- Anordnen eines ersten seitlichen Rahmenelements (110) und Anordnen eines zweiten seitlichen Rahmenelements (112) derart, dass das erste und das zweite seitliche Rahmenelement (110, 112) in einer vertikalen Position in Bezug auf einen Boden (104) gehalten werden,
- Anordnen eines ersten Anschlagelements (132) in einer ersten seitlichen Nut (124) des ersten seitlichen Rahmenelements (110) und Anordnen eines zweiten Anschlagelements (134) in einer zweiten seitlichen Nut (126) des zweiten seitlichen Rahmenelements (112),
- Anordnen eines ersten Photovoltaikmoduls mit seinen seitlichen Kanten in der ersten und zweiten seitlichen Nut (124, 126) des ersten beziehungsweise zweiten seitlichen Rahmenelements (110, 112) abgestützt durch das erste und das zweite Anschlagelement (132, 134), so dass das erste Photovoltaikmodul (102) vertikal zum Boden (104) gehalten wird,
- Anordnen mindestens eines oberen Rahmenelements (136), um eine Oberkante (138) des Photovoltaikmoduls (102) zumindest teilweise abzudecken, und Anordnen mindestens eines Verbinders (152, 154), um das mindestens eine obere Rahmenelement (136) mechanisch mit einem jeweiligen seitlichen Rahmenelement der mindestens zwei seitlichen Rahmenelemente (110, 112) und mit einem weiteren oberen Rahmenelement (150) zu verbinden.

## Revendications

1. Kit de montage comprenant des composants destinés à l'assemblage d'un système de montage (100) conçu pour maintenir un module photovoltaïque (102) verticalement par rapport à un sol (104), le kit de montage comprenant au moins les composants suivants :
- au moins deux éléments de cadre latéraux (110, 112) comportant chacun au moins deux rainures latérales (124, 126) disposées sur des côtés opposés de l'élément de cadre latéral respectif (110, 112), chaque rainure latérale (124, 126) étant conçue pour recevoir un bord latéral (128, 130) du module photovoltaïque (102),
- au moins deux éléments de butée (132, 134) conçus chacun pour être au moins partiellement disposés dans la rainure latérale d'un élément de cadre latéral donné parmi les au moins deux éléments de cadre latéraux (110, 112), chacun des au moins deux éléments de butée (132, 134) étant conçu pour supporter un module photovoltaïque (102) destiné à être reçu dans la rainure latérale respective (124, 126),
- au moins un élément de cadre supérieur (136) conçu pour recouvrir au moins partiellement un bord supérieur (138) du module photovoltaïque (102), et
- au moins un connecteur (152, 154) conçu pour relier mécaniquement l'au moins un élément de cadre supérieur (136) à un élément de cadre latéral respectif parmi les au moins deux éléments de cadre latéraux (110, 112) et à un autre élément de cadre supérieur (150).

2. Kit de montage selon la revendication 1, comprenant au moins deux plaques de base (106, 107), chacune comportant une ouverture de montage (108, 109) conçue pour recevoir et maintenir l'élément de cadre latéral (110, 112) en position verticale par rapport au sol (104).

3. Kit de montage selon au moins l'une des revendications précédentes, dans lequel au moins lesdits au moins deux éléments de cadre latéraux (110, 112) et/ou ledit au moins un élément de cadre supérieur (136) sont réalisés en un matériau électriquement isolant.

4. Kit de montage selon la revendication 2, dans lequel le matériau électriquement isolant est ou comprend de la fibre de verre, du Kevlar et/ou des fibres de carbone.

5. Kit de montage selon au moins l'une des revendications précédentes, dans lequel les au moins deux éléments de cadre latéraux (110, 112) comprennent chacun un passage (136) qui est conçu pour l'insertion d'un élément de butée (132, 134) parmi les au moins deux éléments de butée (132, 134), de sorte que l'élément de butée (132, 134) fasse saillie dans la rainure latérale de l'élément de cadre latéral respectif (110, 112).

6. Kit de montage selon au moins l'une des revendications précédentes, comprenant au moins une entretoise de connexion (140) conçue pour relier mécaniquement entre eux deux éléments de cadre latéraux parmi lesdits au moins deux éléments de cadre latéraux (110, 112).

7. Kit de montage selon au moins l'une des revendications précédentes, comprenant un élément de redirection du vent (146) qui est conçu pour être disposé incliné vers un module photovoltaïque (102) maintenu verticalement par le système de montage (100) assemblé, afin de rediriger le vent incident au-dessus du module photovoltaïque (102).

8. Kit de montage selon au moins l'une des revendications précédentes, comprenant au moins un connecteur (148) qui est conçu pour relier mécaniquement ledit au moins un élément de cadre supérieur (136) à un élément de cadre latéral respectif parmi lesdits au moins deux éléments de cadre latéraux (110, 112).

9. Agencement de modules photovoltaïques (10) comprenant un système de montage (100) et au moins un module photovoltaïque (102) comportant plusieurs cellules solaires (160, 162) conçues pour produire de l'énergie électrique, dans lequel le système de montage (100) maintient ledit au moins un module photovoltaïque (102) verticalement par rapport à un sol (104), dans lequel :
- au moins deux éléments de cadre latéraux (110, 112) sont disposés en position verticale par rapport au sol (104), dans lequel chacun desdits au moins deux éléments de cadre latéraux (110, 112) comprend au moins deux rainures latérales (124, 126) situées sur des côtés opposés de l'élément de cadre latéral respectif (110, 112), et
- au moins deux éléments de butée (132, 134) qui sont au moins partiellement disposés dans la rainure latérale d'un élément de cadre latéral donné parmi les éléments de cadre latéraux (110, 112), dans lequel :
- l'au moins un module photovoltaïque (102) est logé, par ses bords latéraux (128, 130), dans des rainures latérales respectives (124, 126) des au moins deux éléments de cadre latéraux (110, 112) supportés par les deux éléments de butée (132, 134),
- un premier module photovoltaïque (102) est maintenu en position verticale par rapport au sol (104) en étant disposé, par ses bords latéraux (128, 130), dans la première rainure latérale (124) d'un premier élément de cadre latéral (110) et sur un premier élément de butée (132) faisant saillie dans la première rainure latérale (124), ainsi que dans une deuxième rainure latérale (126) d'un deuxième élément de cadre latéral (112) et sur un deuxième élément de butée (134) faisant saillie dans la deuxième rainure latérale (124), et un deuxième module photovoltaïque maintenu en position verticale par rapport au sol (104) en étant disposé avec ses bords latéraux dans une troisième rainure latérale du deuxième élément de cadre latéral et sur un troisième élément de butée faisant saillie dans la troisième rainure latérale, ainsi que dans une quatrième rainure latérale d'un troisième élément de cadre latéral et sur un quatrième élément de butée faisant saillie dans la quatrième rainure latérale, et
- sur le bord supérieur (138) du premier module photovoltaïque (102), un premier élément de cadre supérieur (136) est disposé et, sur le bord supérieur du deuxième module photovoltaïque, un deuxième élément de cadre supérieur (150) est disposé, le premier élément de cadre supérieur (136) et le deuxième élément de cadre supérieur (150) étant reliés mécaniquement l'un à l'autre par un connecteur (152, 154) qui relie également mécaniquement le premier élément de cadre supérieur (136) et le deuxième élément de cadre supérieur (150) au deuxième élément de cadre latéral (112).

10. Agencement de modules photovoltaïques selon la revendication 9, dans lequel lesdits au moins deux éléments de cadre latéraux (110, 112) et l'élément de cadre supérieur (136) sont en contact direct avec une ou plusieurs feuilles de verre (164, 166) du module photovoltaïque (102).

11. Procédé d'assemblage d'un agencement de modules photovoltaïques, le procédé comprenant les étapes consistant à :
- disposer un premier élément de cadre latéral (110) et à disposer un deuxième élément de cadre latéral (112) de manière à ce que les premier et deuxième éléments de cadre latéraux (110, 112) soient maintenus en position verticale par rapport à un sol (104),
- disposer un premier élément de butée (132) dans une première rainure latérale (124) du premier élément de cadre latéral (110) et disposer un deuxième élément de butée (134) dans une deuxième rainure latérale (126) du deuxième élément de cadre latéral (112), disposer un premier module photovoltaïque avec ses bords latéraux dans les première et deuxième rainures latérales (124, 126) des premier et deuxième éléments de cadre latéraux (110, 112), respectivement, en étant soutenu par les premier et deuxième éléments de butée (132, 134), de sorte que le premier module photovoltaïque (102) soit maintenu verticalement par rapport au sol (104), disposer au moins un élément de cadre supérieur (136) pour recouvrir au moins partiellement un bord supérieur (138) du module photovoltaïque (102), et disposer au moins un connecteur (152, 154) pour relier mécaniquement ledit au moins un élément de cadre supérieur (136) à un élément de cadre latéral respectif parmi lesdits au moins deux éléments de cadre latéraux (110, 112) et à un autre élément de cadre supérieur (150).
